# EUROPEAN PATENT SPECIFICATION

(11) **EP 3 842 707 B1**
(45) Date of publication and mention of the grant of the patent: **20.07.2022**
(21) Application number: 20214709.6
(22) Date of filing: 16.12.2020
(51) Int. Cl.: F24S 25/10, F24S 25/634, F24S 25/60, F24S 25/00

(54) **A MOUNTING DEVICE FOR MOUNTING SOLAR PANELS TO A STRUCTURE**
MONTAGEVORRICHTUNG ZUR MONTAGE VON SOLARPANEELEN AN EINER STRUKTUR
DISPOSITIF DE MONTAGE POUR LE MONTAGE DE PANNEAUX SOLAIRES SUR UNE STRUCTURE

(30) Priority: 27.12.2019 SE 1951562
(43) Date of publication of application: 30.06.2021
(73) Proprietor: CC90 Composite AB, 725 98 Västerås (SE)
(72) Inventor: FORSMAN, Sten, SE-195 92 Märsta (SE)
(74) Representative: Swea IP Law AB

(56) References cited:
- WO-A2-2012/143811
- US-A1- 2012 102 853
- US-A1- 2019 190 437
- US-B1- 10 443 895

## Description

### Technical field

The present disclosure relates to a mounting device for mounting solar panels to a structure.

### Background

As the demand for renewable energy is growing, and with the decrease in cost for solar panels, the need for efficient systems for mounting solar panels on roofs and other structures is increasing. Solar panels today are typically mounted on elongated rails, by using a fastening device which is screwed onto the rail and connected to the solar panel. The rails are in turn secured to the desired structure. This installation process is generally time consuming. US8938932 describes a rail-less roof mounting system for installing solar panels on a roof structure. The mounting system comprises a base mount which attaches to the roof using fastening means, such as screws, and a clamp assembly, which includes a clamp member and a plate member. The clamp member and the plate member are engaged through the use of screws. The clamp assembly is engaged with the base mount using the screws as well. The clamp member and plate member interlock the solar panels by sandwiching above and beneath the frame members of the solar panels. A problem with this mounting system is that it has many parts and needs to be assembled on site, which poses a security risk due to e.g. tools and items being dropped from the roof. It is also time consuming to install due to the amount of parts and screws used, both for mounting it on the roof, assembling the clamp assembly and attaching the clamp assembly to the base mount. Another problem with this mounting system is that it cannot be installed on a rail, which is an effective means to use when mounting solar panels.

US9473066 discloses mounting assemblies for solar panels and methods for using the same. It includes a base portion which is screwed onto the installation surface and a support arm defining a support shoulder. The support arm is coupled to the base portion and a rotatable panel clamp assembly is attached to the support shoulder using a fastener, such as a bolt or nut. The clamp assembly includes as least two brackets that releasably secure a portion of one or more solar panels. A problem with this assembly is that it requires an unnecessarily long mounting time due to the many parts of the mounting assembly which also requires use of tools in the installation process.

Documents WO 2012/143811 A2, US 2012/102853 A1, US 10 443 895 B1 and US 2019/190437 A1 also disclose mounting devices for mounting solar panels to a structure.

Therefore, there is a need for am improved device for mounting solar panels on roofs and other structures, which is simple and quick to install.

### Summary

It is an aim of the present disclosure to at least partly overcome the above problems, and to provide an improved mounting device, for mounting solar panels to a structure.

This aim is achieved by a device as defined in claim 1.

The disclosure provides a mounting device for mounting solar panels to a structure. The mounting device comprises a fastening device comprising a fastening element, for fastening the mounting device to the structure, and a first engagement surface, for engaging an underside of a solar panel frame, and a clamping device comprising a ledge with a second engagement surface facing the first engagement surface, for clamping the solar panel frame between the first and second engagement surfaces. The fastening device comprises a clamping guide protrusion arranged perpendicular to the first engagement surface, wherein the clamping device is slidably arranged on the clamping guide protrusion such that it is slidable perpendicularly to the first engagement surface, and the mounting device comprises a lever lock pin attached with a rotatable attachment to the clamping guide protrusion, the lever lock pin being rotatable between an open position and a closed position, wherein the lever lock pin is arranged to push the clamping device towards the fastening device in the closed position so that the solar panel frame is clamped between the first and the second engagement surfaces. This device allows for easy mounting as it does not require any screws or tools when clamping the solar panel. The mounting device does not have many loose parts which also makes the installation easier. It also reduces the risk of mounting solar panels incorrectly. These advantages also make the process less time consuming. The absence of tools also increases safety for the people at the installation site since, for instance, the risk of dropping the tools from a height is eliminated.

According to some aspects, the fastening element comprises a clamp for fastening the mounting device to the structure. Thus, the mounting device is also easy and fast to attach to the structure, and no tools are required.

The mounting device comprises a slide prevention part arranged at the first engagement surface. The slide prevention part comprises a first protruding element arranged to engage in the underside of the solar panel frame to prevent it from sliding when the solar panel frame is clamped between the first and the second engagement surfaces. An advantage of this is that it helps keeping the solar panel securely in place when clamped by the mounting device. This increases the stability of the system and makes it more resistant to, for instance, hard winds and snowstorms.

The fastening device comprises an opening in the first engagement surface and the slide prevention part comprises a second protruding element on an opposite side of the first protruding element, and wherein the slide prevention part is pushed down by the solar panel frame when it is clamped between the first and the second engagement surfaces such that the second protruding element engages the structure under the fastening device through the opening. This prevents the mounting device from sliding on the structure, keeping it securely attached to the structure. This increases the stability of the system. Another advantage is that no tools, screws, glue or other fastening means are required for putting the sliding prevention part in place on the fastening device since it is pressed in place by the solar panel frame. The sliding prevention part only needs to be put in place at the opening of the fastening device. This makes for quick and simple installation.

According to some aspects, the fastening device comprises a first engagement surface on each side of the clamping guide protrusion and the clamping device comprises two ledges, each with a second engagement surface facing a respective first engagement surface, such that two sides of the mounting device can be used to fasten a solar panel. An advantage of this is that both sides of the mounting device are utilized, since one device can support solar panel on two sides. This reduces the number of mounting devices required when installing solar panels and thereby decreases the cost, amount of materials and installation time. This way of clamping the solar panel between two surfaces is easy and fast to implement since there is no need for tools or screws, and it ensures that the solar panels are securely attached to the mounting device.

According to some aspects, the lever lock pin comprises an attachment protrusion and the clamping guide protrusion comprises a clamping guide opening for receiving the attachment protrusion and thus forming the rotatable attachment. Thus, attaching the lever lock pin to the fastening device is very quick, since the lever lock pin can simply be snapped into place. There is no need for tools or screws. The lever lock pin is thereby both easily attached and removed. This type of attachment feature is also easy to manufacture and reliable in operation.

According to some aspects, the clamping device comprises a bearing surface which is parallel to the first and second engagement surfaces and the lever lock pin comprises a pressing surface which presses against the bearing surface in the closed position. Thus, the lever lock pin presses the clamping device on the bearing surface. By having the lever lock pin pressing the clamping device over a surface, the durability of the device is increased compared to applying pointwise pressure on a small area.

According to some aspects, the clamping guide protrusion comprises a first and a second protrusion, each with a respective clamping guide opening and the lever lock pin comprises a first and a second attachment protrusion, each to be received in a respective clamping guide opening. This has the same advantages as having a single attachment protrusion on the lever lock pin attached to one of the clamping guide protrusions, as described above, but with the added advantage of providing a more stable attachment between the lever lock pin and the fastening device, since it is secured in both clamping guide protrusions. The symmetry of the first and second attachment protrusions also facilitates that the lever lock pin can be inserted in two ways as explained below.

According to some aspects, the pressing surface comprises a first pressing surface and a second pressing surface arranged on opposite sides of the lever lock pin, wherein the lever lock pin is arranged to be attached to the clamping guide protrusion in two ways, one where the first attachment protrusion is arranged in the clamping guide opening of the first protrusion and where the first pressing surface presses against the the bearing surface in the closed position and one where the first attachment protrusion is arranged in the clamping guide opening of the second protrusion and where the second pressing surface presses against the bearing surface in the closed position. The lever lock pin can thus be attached to the clamping guide protrusion in two ways.

According to some aspects, the first and second attachment protrusions are arranged at first distance from the first pressing surface and at a second distance from the second pressing surface, wherein the first and second distance are not the same. The attachment protrusions are thus arranged off-center on the lever lock pin. In other words, the mounting device can be used for two different thicknesses of solar panel frames, e.g. for 35 mm and 40 mm, by choosing which way the lever lock pin is attached to the clamping guide openings and thus which attachment protrusion is attached to which clamping guide opening.

According to some aspects, the fastening device comprises cable holders for holding electrical cables associated with the solar panels. Cables are generally required for installing solar panels, and therefore an advantage with the cable holders is that they keep the cables in place and from getting tangled. Thereby, the safety on site is increased due to the reduced risk of, for example, tripping over cables when doing maintenance on the solar panels. The risk of damage to the cables due to entanglement or human interference is also reduced. It is also more visually appealing to have a solar panel installation with less visible cables.

According to some aspects, the mounting device comprises an end piece arranged to be attached on a side of the clamping device such that the side of the clamping device is covered by the end piece when only one ledge is to be used to fasten a solar panel. Thus, preventing the mounting device from tilting when only one of the sides of the clamping device is used to fasten a solar panel. This also makes the mounted system more aesthetically pleasing.

According to some aspects, one or more of the fastening device, clamping device, lever lock pin and slide prevention part, and any components thereof, can be made of materials such as plastic or metal. Preferably, the fastening device, clamping device and lever lock pin, and all components thereof, comprise plastic composite, for instance, glass fibre reinforced plastic. Plastic composite makes for resilient components that are easily manufactured in one piece, which reduces the cost of production. Preferably, the slide prevention part comprises metal, for example steel. Solar panel frames are generally made of aluminium, which is softer than steel, meaning that the slide prevention part slightly deforms the solar panel frame when pressed against its side and thereby prevent the solar panels from sliding.

In another aspect, the aim of the invention is achieved by use of the mounting device according to above for mounting solar panels to a structure. The use has the same advantages as described above.

In another aspect, the aim of the invention is achieved by a system for mounting solar panels on a structure. The system comprises a structure in the form of a support rail comprising two longitudinal grooves arranged at opposite lateral sides of the structure, and a mounting device according to above. The fastening element comprises two wings arranged at a distance from each other and defining a space for receiving a part of the structure, each wing comprises an engagement element adapted to engage with a respective groove of the structure. The system makes it possible to mount the solar panels on a structure without the use of tools. Thus, besides from the advantages associated with the mounting device according to above, the mounting device is easy and fast to attach to the structure, and no tools are required.

### Brief description of the drawings

The invention will now be explained more closely by the description of different aspects and with reference to the appended figures.
Fig. 1 shows an example of the mounting device where a lever locking pin is in an open position and a solar panel frame is arranged in place but has not been clamped by the mounting device.
Fig. 2 shows an example of the mounting device where a lever locking pin is in a closed position and a solar panel frame is arranged in place and has been clamped by the mounting device.
Fig. 3 shows an example of the mounting device where a lever locking pin is in an open position.
Fig. 4 shows the same as figure 3 but obliquely from below.
Fig. 5 shows an example mounting device in an exploded view.
Fig. 6 shows an example lever lock pin.
Fig. 7 shows an example slide prevention part which may be used to ensure that the solar panel does not slide in any direction when clamped by the mounting device. It may also be used to prevent a fastening device from sliding relative a structure the mounting device is mounted on.
Fig. 8 shows an example clamping device obliquely from below.
Fig. 9 shows an example clamping device obliquely from above.
Fig. 10 shows an example clamping device obliquely from above and with an example end piece.
Fig. 11 shows an example clamping device obliquely from above and with an example end piece which has been mounted on a side of the clamping device.
Fig. 12 shows an example of a fastening device with a lever locking pin in an open position.
Fig. 13 shows an example of a mounting device with a lever locking pin in a closed position.

### Detailed description

The present invention is not limited to the embodiments disclosed but may be varied and modified within the scope of the following claims.

Aspects of the present disclosure will be described more fully hereinafter with reference to the accompanying drawings. The device disclosed herein can be realized in many different forms and should not be construed as being limited to the aspects set forth herein. Like numbers in the drawings refer to like elements throughout.

The terminology used herein is for the purpose of describing particular aspects of the disclosure only and is not intended to limit the disclosure. As used herein, the singular forms "a", "an" and "the" are intended to include the plural forms as well, unless the context clearly indicates otherwise.

Unless otherwise defined, all terms, including technical and scientific terms, used herein have the same meaning as commonly understood by one of ordinary skill in the art to which this disclosure belongs.

The disclosure presents a mounting device which is used to mount solar panels to a structure, in other words, a mounting device, for mounting solar panels to a structure. The structure is for example a roof, a wall or rails.

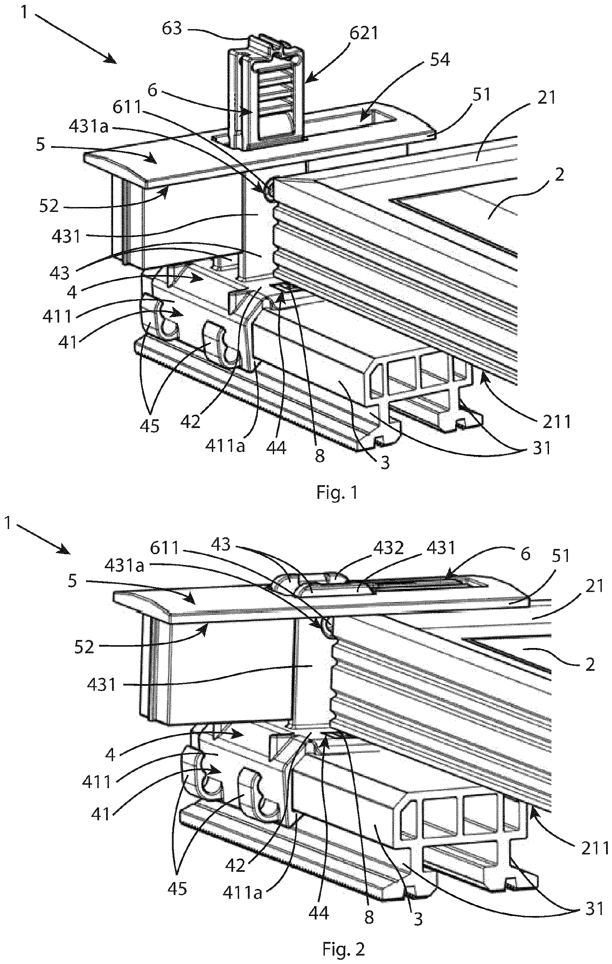

Figures 1 and shows an example of the mounting device 1 according to some aspects of the disclosure. In figure 1, the mounting device 1 is open and does not clamp the solar panel frame 21 of a solar panel 2 and in figure 2, the mounting device 1 is closed and thus clamps the solar panel frame 21 such that the solar panel 2 is mounted. The general idea is that a device to mount solar panels 2 in a fast and easy way is to be achieved.

In figures 1 and 2, the mounting device 1 is mounted on a structure 3 which here is a support rail 3, but it can also be adapted to be mounted on other structures.

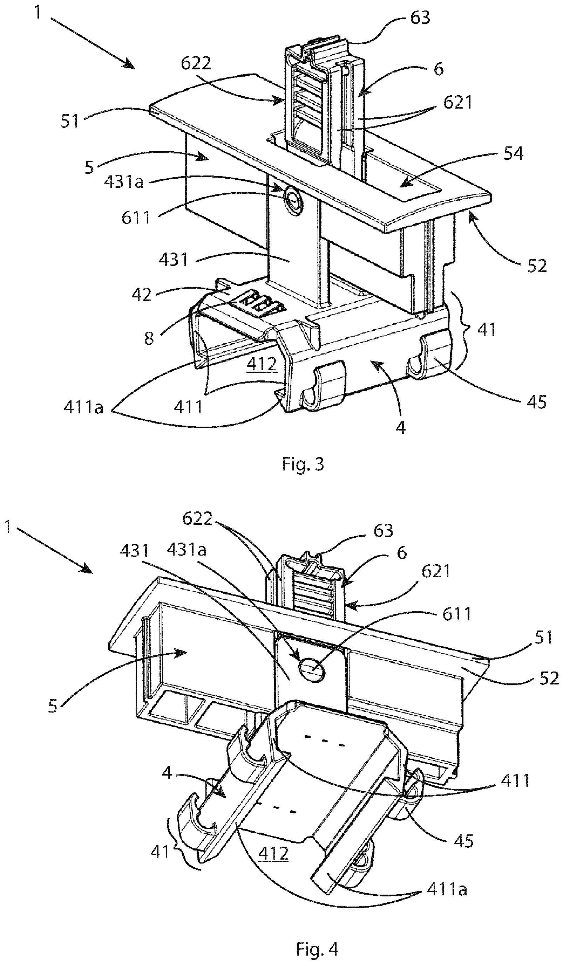

In figures 3, 4 and 5, all parts of an example mounting device 1 are shown. As can be seen, there are only a few parts and when assembled, there are no loose parts required to mount a solar panel 2.

The mounting device 1 comprises a fastening device 4. The fastening device 4 being the part to be directly attached to the structure. Thus, the fastening device 4 comprises a fastening element 41, for fastening the mounting device 1 to the structure. The fastening element 41 may be different depending on the structure 3 the mounting device 1 is to be mounted on. The fastening element 41 is, for example, to be screwed directly onto the structure 3 and may then comprise screw holes. The fastening element 41 may, alternatively, comprise a clamp for fastening the mounting device 1 to the structure. Thus, the mounting device 1 is also easy and fast to attach to the structure, and no tools are required. The fastening element 41 may also be a quick fit attachment where a corresponding attachment is to be mounted on the structure. In the figures, the fastening element 41 is exemplified with a clamp that clamps around a support rail 3, the support rail 3 being the structure 3.

The fastening device 4 comprises a first engagement surface 42, for engaging an underside 211 of a solar panel frame 21. As can be seen in figures 1 and 2, the fastening device 4 has a top surface that is flat and which the solar panel frame 21 rest on when mounted. The first engagement surface 42 is thus parallel with a plane that the solar panel 2 is to be arranged in. The fastening device 4 comprises a clamping device 5 comprising a ledge 51 with a second engagement surface 52 facing the first engagement surface 42, for clamping the solar panel frame 21 between the first and second engagement surfaces 42, 52. The ledge 51 being an elongated protrusion on the clamping device 5 which forms the second engagement surface 52 on its underside so that it face the first engagement surface 42. The ledge 51 may be elongated so that an elongated second engagement surface 52 is formed.

The fastening device 4 comprises a clamping guide protrusion 43 arranged perpendicular to the first engagement surface 42. The clamping device 5 is slidably arranged on the clamping guide protrusion 43 such that it is slidable perpendicularly to the first engagement surface 42. The clamping device 5 is thus slidable along the clamping guide protrusion 43 such that it is moveable between a position where the first and second engagement surfaces 42, 52 are closer together than in a position where the first and second engagement surfaces 42, 52 are further from each other. The distance between the first and second engagement surfaces 42, 52 is thus changed by moving the clamping device 5 slidably along the clamping guide protrusion 43.

The mounting device 1 comprises a lever lock pin 6 attached with a rotatable attachment 7 to the clamping guide protrusion 43, the lever lock pin 6 being rotatable between an open position and a closed position. In figure 1, the lever lock pin 6 is arranged in the open position. In figure 2, the lever lock pin 6 is arranged in the closed position. The lever lock pin 6 is arranged to push the clamping device 5 towards the fastening device 4 in the closed position so that the solar panel frame 21 is clamped between the first and the second engagement surfaces 42, 52. This device allows for easy mounting as it does not require any screws or tools when clamping the solar panel 2. The mounting device 1 does not have many loose parts which also makes the installation easier. It also reduces the risk of mounting solar panels 2 incorrectly. These advantages also make the process less time consuming. The absence of tools also increases safety for the people at the installation site since, for instance, the risk of dropping the tools from a height is eliminated.

In figure 1, where the lever lock pin 6 is in the open position, the ledge 51 with the second engagement surface 52 is not abutting the solar panel frame 21. In figure 2, where the lever lock pin 6 is in its closed position, the second engagement surface 52 has been pushed down and presses against the solar panel frame 21 and thus hold it in place.

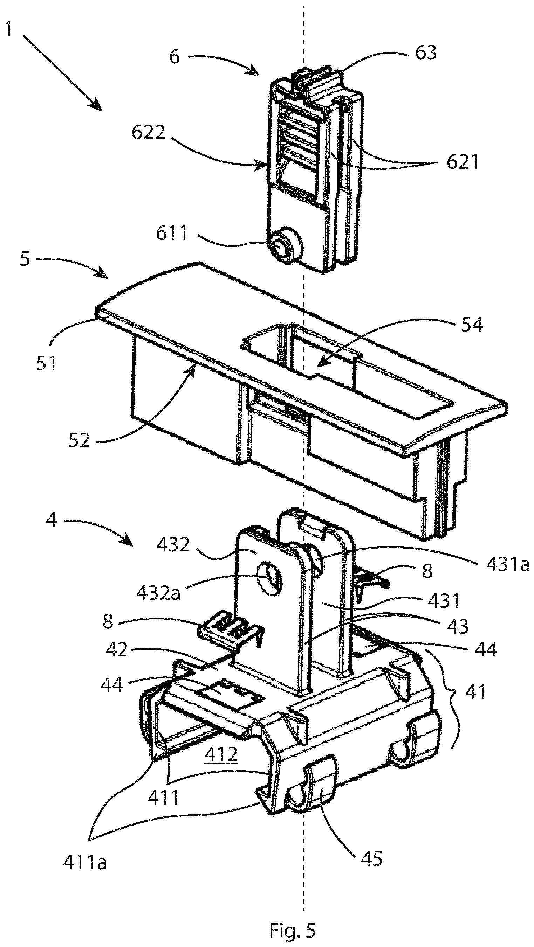

Figure 4 shows the same as figure 3 but obliquely from below and figure 5 shows an example mounting device 1 in an exploded view. The mounting device 1 does not comprise so many different parts and is easy to assemble.

The mounting device 1 may be arranged to fasten at least one solar panel 2 on each side of it. In such a case, the fastening device 4 comprises a first engagement surface 42 on each side of the clamping guide protrusion 43 and the clamping device 5 comprises two ledges 51, each with a second engagement surface 52 facing a respective first engagement surface 42, such that two sides of the mounting device 1 can be used to fasten a solar panel 2. An advantage of this is that both sides of the mounting device 1 are utilized, since one device can support solar panel 2 on two sides. This reduces the number of mounting devices 1 required when installing solar panels 2 and thereby decreases the cost, amount of materials and installation time. This way of clamping the solar panel 2 between two surfaces is easy and fast to implement since there is no need for tools or screws, and it ensures that the solar panels 2 are securely attached to the mounting device 1. In the figures, such a mounting device 1 is illustrated where solar panels 2 can be mounted on two sides of the mounting device 1.

In figures 1 and 2, the solar panel frame 21 is arranged to use only half of the mounting device 1. That is because the other half can be used to mount another solar panel frame 21. In other words, one side of the mounting device 1 can be used to mount two solar panels 2. Of course, the mounting device 1 then only mounts a corner of a solar panel 2 and preferably, there is one mounting device 1 in each corner of the solar panel 2. In combination with the above described alternative where the fastening device 4 comprises a first engagement surface 42 on each side of the clamping guide protrusion 43, four corners of four solar panels 2 can be fastened with one mounting device 1.

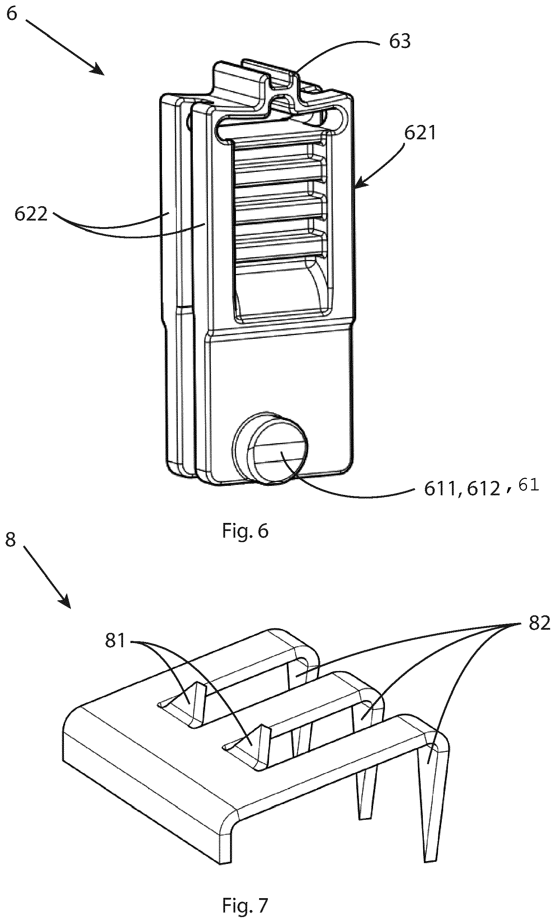

Figure 6 shows an example lever lock pin 6. The lever lock pin 6 comprises, for example, an attachment protrusion 61 and the clamping guide protrusion 43 comprises a clamping guide opening 431a, 432a for receiving the attachment protrusion 61 and thus forming the rotatable attachment 7. Thus, attaching the lever lock pin 6 to the fastening device 4 is very quick, since the lever lock pin 6 can simply be snapped into place. There is no need for tools or screws. The lever lock pin 6 is thereby both easily attached and removed. This type of attachment feature is also easy to manufacture and reliable in operation. An alternative to the attachment protrusion 61 can be that the lever lock pin 6 also comprises an opening and that a sprint is used to fasten the lever lock pin 6 rotatable to the clamping guide protrusion 43 by inserting it through the clamping guide opening 431a, 432a and the lever lock pin 6 opening.

Figure 7 shows an example slide prevention part 8 which may be used to ensure that the solar panel 2 does not slide in any direction when clamped by the mounting device 1. To achieve this, the mounting device 1 may comprise a slide prevention part 8 arranged at the first engagement surface 42. The slide prevention part 8 comprises a first protruding element 81 arranged to engage in the underside 211 of the solar panel frame 21 to prevent it from sliding when the solar panel frame 21 is clamped between the first and the second engagement surfaces 42, 52. In figure 7, the illustrated example slide prevention part 8 has a first protruding element 81 comprising two protruding parts. The two protruding parts are pressed into the solar panel frame 21 when a solar panel 2 is mounted with the mounting device 1. In figures 1 and 2, the slide prevention part 8 is visible in the first engagement surface 42 under the solar panel frame 21. It should be noted that the slide prevention part 8 does not need to be a loose part, as shown in figure 5, but can be attached to the fastening device 4.

An alternative slide prevention part 8 is to use a high friction material on the first engagement surface 42. The high friction material may be for example rubber.

An advantage with the slide prevention part 8 is that it helps keeping the solar panel 2 securely in place when clamped by the mounting device 1. This increases the stability of the system and makes it more resistant to, for instance, hard winds and snowstorms.

The slide prevention part 8 may also be used to prevent a fastening device 4 from sliding relative a structure 3 the mounting device 1 is mounted on. In such a case, the fastening device 4 comprises an opening 44 in the first engagement surface 42 and the slide prevention part 8 comprises a second protruding element 82 on an opposite side of the first protruding element 81, and wherein the slide prevention part 8 is pushed down by the solar panel frame 21 when it is clamped between the first and the second engagement surfaces 42, 52 such that the second protruding element 82 engages the structure 3 under the fastening device 4 through the opening 44. In other words, when the lever lock pin 6 is moved to its closed position and the clamping device 5 is moved down to clamp the solar panel frame 21 between the first and second engagement surfaces 42, 52, the solar panel frame 21 pushes the slide prevention part 8 down through the opening 44 so that it also pushes against the structure 3 and thus holds the mounting device 1 and the solar panel frame 21 in place relative the structure.

This prevents the mounting device 1 from sliding on the structure, keeping it securely attached to the structure. This increases the stability of the system. Another advantage is that no tools, screws, glue or other fastening means are required for putting the sliding prevention part in place on the fastening device 4 since it is pressed in place by the solar panel frame 21. The sliding prevention part only needs to be put in place at the opening 44 of the fastening device 4. This makes for quick and simple installation.

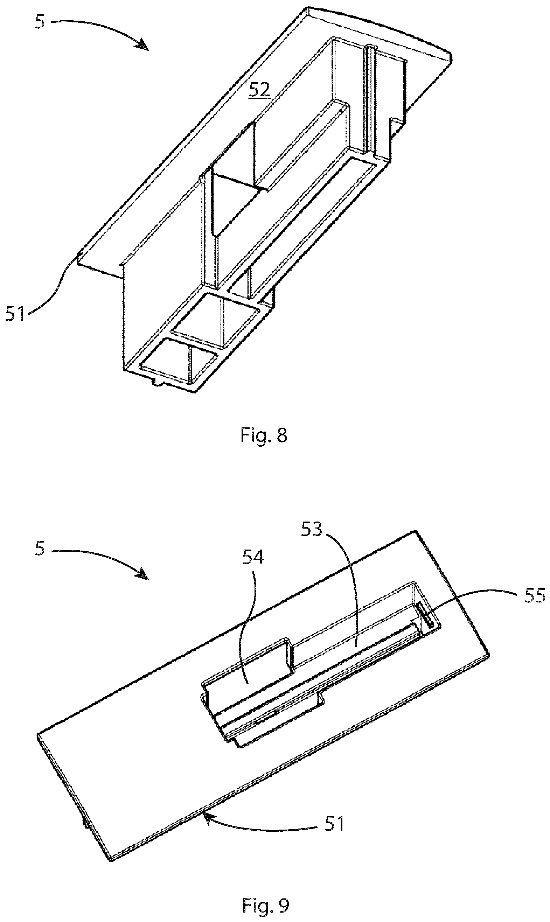

Figure 8 shows an example clamping device 5 obliquely from below. Figure 9 shows an example clamping device 5 obliquely from above. The openings in the bottom is for material savings reasons. The fast that one side of the bottom is narrower than the other is in preparation for the parts being produced by an automatic robot line. The narrow part in the middle of the clamping device 5 and the opening upwards is where the clamping guide protrusion 43 of the fastening device 4 is arranged to provide the slidable arrangement of the clamping device 5 on the clamping guide protrusion 43. The opening 54 in the top side of the clamping device 5 is to receive the lever lock pin 6 in both the open and closed position.

In figure 9, in the view from above, it can be seen that the clamping device 5 may comprise a bearing surface 53 which is parallel to the first and second engagement surfaces 42, 52. The lever lock pin 6 comprises a pressing surface 621, 622 which presses against the bearing surface 53 in the closed position. The pressing surface 621, 622 can be seen in, for example, figure 6. In its closed position, the lever lock pin 6 presses the clamping device 5 downwards with the pressing surface 621, 622 on the bearing surface 53. By having the lever lock pin 6 pressing the clamping device 5 over a surface, the durability of the device is increased compared to applying pointwise pressure on a small area. In this example, the whole side of the lever lock pin 6 comprises the pressing surface 621, 622. Thus, in the closed position, the whole side of the lever lock pin 6 pushed the bearing surface 53 downwards.

In figure 6 it can be seen that the lever lock pin 6 also may comprise a snap lock 63 which is to be snapped onto a snap lock ridge 55 in the clamping device 5. The snap lock 63 and the corresponding snap lock ridge 55 are engaged when the lever lock pin 6 is in the closed position. The snap lock 63 is not necessary for the lever lock pin 6 to stay in the closed position but provides a sensory feedback to the person moving the lever lock pin 6 from the open to the closed position. When the lever lock pin 6 is moved to the closed position, the snap lock 63 will provide a clicking sound when it snaps into place in the snap lock ridge 55. The user is thus ensured by the sensory feedback that the lever lock pin 6 is in a correct position.

The clamping guide protrusion 43 may comprise a first and a second protrusion 431, 432, each with a respective clamping guide opening 431a, 432a. The first and second protrusion 431, 432 being parallel to each other and the lever lock pin 6 comprises a first and a second attachment protrusion 611, 612, each to be received in a respective clamping guide opening 431a, 432a. The lever lock pin 6 is thus arranged between the first and the second protrusion 431, 432. This has the same advantages as having a single attachment protrusion 61 on the lever lock pin 6 attached to one of the clamping guide protrusions 431, 432, as described above, but with the added advantage of providing a more stable attachment between the lever lock pin 6 and the fastening device 4, since it is secured in both clamping guide protrusions 431, 432. The symmetry of the first and second attachment protrusions 611, 612 also facilitates that the lever lock pin 6 can be inserted in two ways as explained below.

According to some aspects, the pressing surface comprises a first pressing surface 621 and a second pressing surface 622 arranged on opposite sides of the lever lock pin 6. The lever lock pin 6 thus comprises two pressing surfaces 621, 622 that can be used to press against the bearing surface 53 of the clamping device 5. The lever lock pin 6 is then arranged to be attached to the clamping guide protrusion 43 in two ways, one where the first attachment protrusion 611 is arranged in the clamping guide opening 431a of the first protrusion 431 and where the first pressing surface 621 presses against the the bearing surface 53 in the closed position and one where the first attachment protrusion 611 is arranged in the clamping guide opening 432a of the second protrusion 432 and where the second pressing surface 622 presses against the bearing surface 53 in the closed position. The lever lock pin 6 can thus be attached to the clamping guide protrusion 43 in two ways. In other words, the lever lock pin 6 is attachable to the clamping guide protrusion 43 in two ways. The lever lock pin 6 can, according to some aspects, be removed from the clamping guide protrusion 43 and turned 180° and then be reinserted. This can be seen in figure 5, where the lever lock pin 6 can be turned 180° around the dotted line representing the axel along which the fastening device 4, the clamping device 5 and the lever lock pin 6 is to be arranged.

In figure 5, it can also be seen that the first and second attachment protrusions 611, 612 are not centrally arranged on the lever lock pin 6. The first and second attachment protrusions 611, 612 may thus be arranged at first distance from the first pressing surface 621 and at a second distance from the second pressing surface 622, wherein the first and second distance are not the same. The attachment protrusions 61 are thus arranged off-center on the lever lock pin 6. Thus, depending on which way the lever lock pin 6 is attached to the clamping guide protrusion 43, the lever lock pin 6 will push the clamping device 5 down different lengths in the closed position. In other words, the mounting device 1 can be used for two different thicknesses of solar panel frames 21, e.g. for 35 mm and 40 mm, by choosing which way the lever lock pin 6 is attached to the clamping guide openings 431a, 432a and thus which attachment protrusion 61 is attached to which clamping guide opening 431a, 432a. In other words, the first and second attachment protrusions 611, 612 are arranged off-centre on the lever lock pin 6. The attachment protrusions 611, 612 are arranged off-centre on the lever lock pin 6 and the lever lock pin 6 is removably attached to the clamping guide protrusion 43 so that is can be removed, turned and reattached to achieve different heights of the clamping.

Since solar panels 2 can be placed in locations where they are visible to people, one aspect of the mounting of solar panels 2 is the overall lock of the mounting. As previously described, two sides of the mounting device 1 can be used to fasten a solar panel 2 if the fastening device 4 comprises a first engagement surface 42 on each side of the clamping guide protrusion 43 and the clamping device 5 comprises two ledges 51, each with a second engagement surface 52 facing a respective first engagement surface 42. In such a case, on the sides of a solar panel 2 installation site, there will be mounting devices 1 that only holds solar panels 2 on one side of the mounting device 1, as is also the case in figures 1 and 2. Thus, the mounting device 1 may comprises an end piece 9 arranged to be attached on a side of the clamping device 5 such that the side of the clamping device 5 is covered by the end piece 9 when only one ledge 51 is to be used to fasten a solar panel 2.

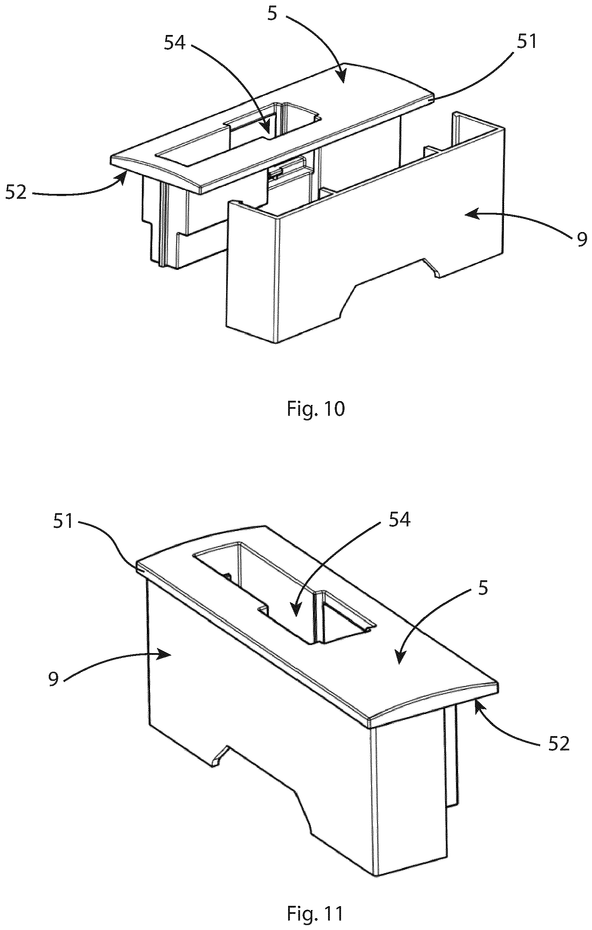

Figure 10 shows an example clamping device 5 obliquely from above and with an example end piece 9. The end piece 9 prevents the mounting device 1 from tilting when only one of the sides of the clamping device 5 is used to fasten a solar panel 2. This also makes the mounted system more aesthetically pleasing since parts of the rest of the mounting device 1 are covered by the end piece 9. The end piece 9 being, for example, arranged as a housing to cover the parts of one side of the mounting device 1. Figure 11 shows an example clamping device 5 obliquely from above and with an example end piece 9 which has been mounted on a side of the clamping device 5.

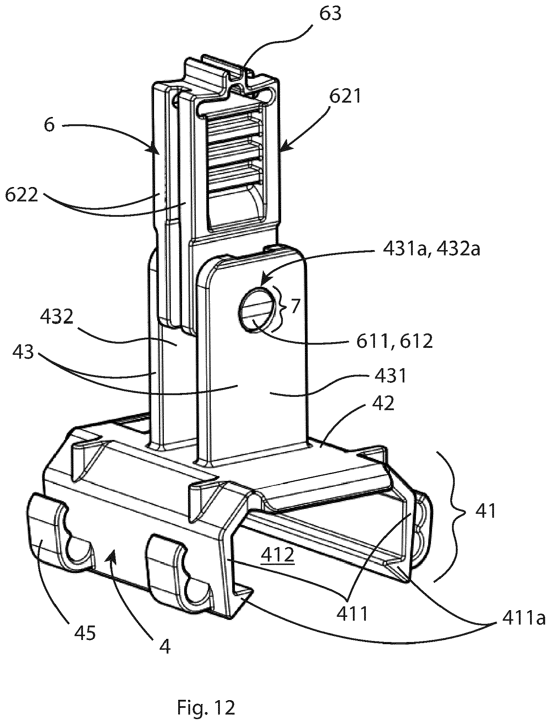

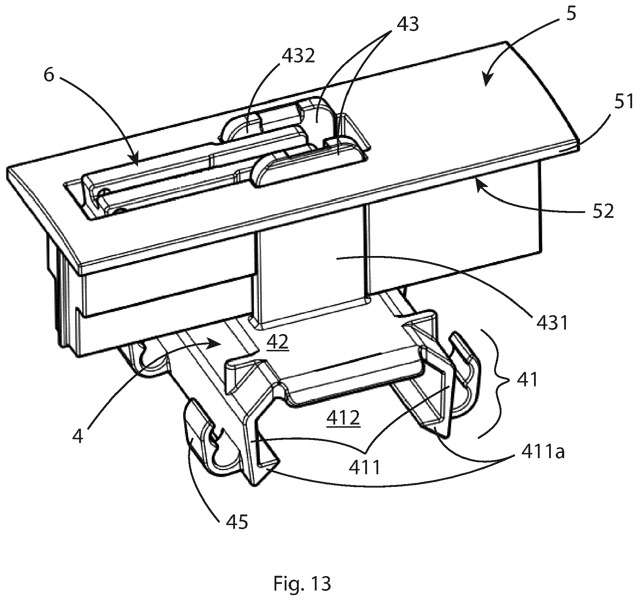

Figure 12 shows an example of a fastening device 4 with a lever locking pin in an open position and figure 13 shows an example of a mounting device 1 with a lever locking pin in a closed position. In these examples, the slide prevention part 8 and its opening are not a part of the mounting device 1. As previously explained, the slide prevention part 8 may be rubber or any high friction material between the mounting device 1 and the solar panel frame 21. The high friction material may also be a part of the solar panel frame 21 and thus not be part of the mounting device 1.

One or more of the fastening device 4, clamping device 5, lever lock pin 6 and slide prevention part 8, and any components thereof, can be made of materials such as plastic or metal. Preferably, the fastening device 4, clamping device 5 and lever lock pin 6, and all components thereof, comprise plastic composite, for instance, glass fibre reinforced plastic. Plastic composite makes for resilient components that are easily manufactured in one piece, which reduces the cost of production. Non-conductive composite material also ensures that there is no charge transfer between the solar panels 2. Preferably, the slide prevention part 8 comprises metal, for example steel. Solar panel frames 21 are generally made of aluminium, which is softer than steel, meaning that the slide prevention part 8 slightly deforms the solar panel frame 21 when pressed against its side and thereby prevent the solar panels 2 from sliding. The slide prevention part 8 is, for example, made of A2 steel which pushes into the solar panel frame 21 which is commonly made of aluminium.

To increase the aesthetics of the mounting devices 1 and the mounted solar panels 2, the fastening device 4 comprises cable holders 45 for holding electrical cables associated with the solar panels 2. Cables are generally required for installing solar panels 2, and therefore an advantage with the cable holders 45 is that they keep the cables in place and from getting tangled. Thereby, the safety on site is increased due to the reduced risk of, for example, tripping over cables when doing maintenance on the solar panels 2. The risk of damage to the cables and connectors due to entanglement or human interference is also reduced. It is also more visually appealing to have a solar panel installation with less visible cables and connectors. The cable holders 45 are for example clamps or grooves on the fastening device 4 where the cables can be inserted or pushed down to be held in place by the mounting device 1.

An aim of the invention is achieved by use of the mounting device 1 according to above for mounting solar panels 2 to a structure. The use has the same advantages as described above.

In figures 1 and 2, an example system for mounting solar panels 2 is illustrated. The system comprises a structure 3 in the form of a support rail comprising two longitudinal grooves 31 arranged at opposite lateral sides of the support rail 3, and a mounting device 1 according to above. The fastening element 41 comprises two wings 411 arranged at a distance from each other and defining a space 412 for receiving a part of the support rail 3, each wing 411 comprises an engagement element 411a adapted to engage with a respective groove 31 of the support rail 3. The system makes it possible to mount the solar panels 2 on a structure 3 without the use of tools. Thus, besides from the advantages associated with the mounting device 1 according to above, the mounting device 1 is easy and fast to attach to the structure, and no tools are required. The wings 411 may be resilient to allow snap fit of the mounting device 1 to the support rail 3.

The support rail 3 is preferably made of an electrical insulating material, for example, plastic with a low electrical conductivity.

In case the slide prevention part 8 is arranged to hold both the solar panel frame 21 and the structure 3 in place through an opening in the fastening device 4, the slide prevention part 8 ensures that the fastening device 4 does not slide along the support rail 3. Alternatively, for holding the fastening device 4 in place relative the support rail 3, the wings 411 may comprise a protruding element or an indentation to receive a respective indentation or protruding element arranged on the support rail 3.

### References:

1. Mounting device
2. Solar panel
   21. Solar panel frame
   211. Underside
3. Structure, support rail
   31. Grooves
4. Fastening device
   41. Fastening element
      411. Wings
         a. Engagement element
      412. Space
   42. First engagement surface
   43. Clamping guide protrusion
      431. First protrusion
         a. First protrusion clamping guide opening
      432. Second protrusion
         a. Second protrusion clamping guide opening
   44. Opening
   45. Cable holder
5. Clamping device
   51. Ledge
   52. Second engagement surface
   53. Bearing surface
   54. Opening for lever lock pin
   55. Snap lock ridge
6. Lever lock pin
   61. Attachment protrusion 611. First attachment protrusion 612. Second attachment protrusion
   62. Pressing surface 621. First pressing surface 622. Second pressing surface
   63. Snap lock
7. Rotatable attachment
8. Slide prevention part
   81. First protruding element
   82. Second protruding element
9. End piece

## Claims

1. A mounting device (1), for mounting solar panels (2) to a structure (3), the mounting device (1) comprising:
- a fastening device (4) comprising a fastening element (41), for fastening the mounting device (1) to the structure (3), and a first engagement surface (42), for engaging an underside (211) of a solar panel frame (21),
- a clamping device (5) comprising a ledge (51) with a second engagement surface (52) facing the first engagement surface (42), for clamping the solar panel frame (21) between the first and second engagement surfaces (42, 52), the fastening device (4) comprises a clamping guide protrusion (43) arranged perpendicular to the first engagement surface (42), wherein the clamping device (5) is slidably arranged on the clamping guide protrusion (43) such that it is slidable perpendicularly to the first engagement surface (42), and the mounting device (1) comprises:
- a lever lock pin (6) attached with a rotatable attachment (7) to the clamping guide protrusion (43), the lever lock pin (6) being rotatable between an open position and a closed position, wherein the lever lock pin (6) is arranged to push the clamping device (5) towards the fastening device (4) in the closed position so that the solar panel frame (21) is clamped between the first and the second engagement surfaces (42, 52),
- a slide prevention part (8) arranged at the first engagement surface (42), the slide prevention part (8) comprising a first protruding element (81) arranged to engage in the underside (211) of the solar panel frame (21) to prevent it from sliding when the solar panel frame (24) is clamped between the first and the second engagement surfaces (42, 52), and
**characterized in that** the fastening device (4) comprises an opening (44) in the first engagement surface (42) and the slide prevention part (8) comprises a second protruding element (82) on an opposite side of the first protruding element (81), and wherein the slide prevention part (8) is pushed down by the solar panel frame (21) when it is clamped between the first and the second engagement surfaces (42, 52) such that the second protruding element (82) engages the structure (3) under the fastening device (4) through the opening (44).

2. The mounting device (1) according to claim 1, wherein the fastening element (41) comprises a clamp for fastening the mounting device (1) to the structure (3).

3. The mounting device (1) according to any preceding claim, wherein the fastening device (4) comprises a first engagement surface (42) on each side of the clamping guide protrusion (43) and the clamping device (5) comprises two ledges (51), each with a second engagement surface (52) facing a respective first engagement surface (42), such that two sides of the mounting device (1) can be used to fasten a solar panel (2).

4. The mounting device (1) according to any preceding claim, wherein the lever lock pin (6) comprises an attachment protrusion (61) and the clamping guide protrusion (43) comprises a clamping guide opening (431a, 432a) for receiving the attachment protrusion (61) and thus forming the rotatable attachment (7).

5. The mounting device (1) according to any preceding claim, wherein the clamping device (5) comprises a bearing surface (53) which is parallel to the first and second engagement surfaces (42, 52) and the lever lock pin (6) comprises a pressing surface (621, 622) which presses against the bearing surface (53) in the closed position.

6. The mounting device (1) according to claim 4 and 5, wherein the clamping guide protrusion (43) comprises a first and a second protrusion (431, 432), each with a respective clamping guide opening (431a, 432a) and the lever lock pin (6) comprises a first and a second attachment protrusion (611, 612), each to be received in a respective clamping guide opening (431a, 432a).

7. The mounting device (1) according to claim 6, wherein the pressing surface comprises a first pressing surface (621) and a second pressing surface (622) arranged on opposite sides of the lever lock pin (6), wherein the lever lock pin (6) is arranged to be attached to the clamping guide protrusion (43) in two ways, one where the first attachment protrusion (611) is arranged in the clamping guide opening (431a) of the first protrusion (431) and where the first pressing surface (621) presses against the the bearing surface (53) in the closed position and one where the first attachment protrusion (611) is arranged in the clamping guide opening (432a) of the second protrusion (432) and where the second pressing surface (622) presses against the bearing surface (53) in the closed position.

8. The mounting device (1) according to claim 7, wherein the first and second attachment protrusions (611, 612) are arranged at first distance from the first pressing surface (621) and at a second distance from the second pressing surface (622), wherein the first and second distance are not the same.

9. The mounting device (1) according to any preceding claim, wherein the fastening device (4) comprises cable holders (45) for holding electrical cables associated with the solar panels (2).

10. The mounting device (1) according to claim 3, comprising an end piece (9) arranged to be attached on a side of the clamping device (5) such that the side of the clamping device (5) is covered by the end piece (9) when only one ledge (51) is to be used to fasten a solar panel (2).

11. Use of the mounting device (1) according to any of the previous claims for mounting solar panels (2) to a structure (3).

12. A system for mounting solar panels (2), wherein the system comprises:
- a structure (3) in the form of a support rail comprising two longitudinal grooves (31) arranged at opposite lateral sides of the structure (3),
- a mounting device (1) according to any of the claims 1 - 10,
wherein the fastening element (41) comprising two wings (411) arranged at a distance from each other and defining a space (412) for receiving a part of the structure (3), each wing (411) comprises an engagement element (411a) adapted to engage with a respective groove (31) of the structure (3).

## Patentansprüche

1. Montagevorrichtung (1) zum Montieren von Solarpanelen (2) an eine Struktur (3), wobei die Montagevorrichtung (1) Folgendes umfasst:
- eine Befestigungsvorrichtung (4), umfassend ein Befestigungselement (41) zum Befestigen der Montagevorrichtung (1) an die Struktur (3) und eine erste Eingriffsfläche (42) zum Eingreifen einer Unterseite (211) eines Solarpanelrahmens (21),
- eine Klemmvorrichtung (5), umfassend eine Leiste (51) mit einer zweiten Eingriffsfläche (52), die der ersten Eingriffsfläche (42) zugewandt ist, zum Klemmen des Solarpanelrahmens (21) zwischen der ersten und der zweiten Eingriffsfläche (42, 52),
wobei die Befestigungsvorrichtung (4) einen Klemmführungsvorsprung (43), der senkrecht zur ersten Eingriffsfläche (42) angeordnet ist, umfasst, wobei die Klemmvorrichtung (5) verschiebbar an dem Klemmführungsvorsprung (43) angeordnet ist, so dass sie senkrecht zu der ersten Eingriffsfläche (42) verschiebbar ist, und wobei die Montagevorrichtung (1) Folgendes umfasst:
- einen Hebelverriegelungsstift (6), der mit einer drehbaren Befestigung (7) an dem Klemmführungsvorsprung (43) angebracht ist, wobei der Hebelverriegelungsstift (6) zwischen einer offenen Position und einer geschlossenen Position drehbar ist, wobei der Hebelverriegelungsstift (6) angeordnet ist, um die Klemmvorrichtung (5) zu der Befestigungsvorrichtung (4) in der geschlossenen Position zu drücken, so dass der Solarpanelrahmen (21) zwischen der ersten und der zweiten Eingriffsfläche (42, 52) eingeklemmt wird,
- ein Verschiebungsschutzteil (8), das an der ersten Eingriffsfläche (42) angeordnet ist, wobei das Verschiebungsschutzteil (8) ein erstes Vorsprungselement (81) umfasst, das angeordnet ist, um in die Unterseite (211) des Solarpanelrahmens (21) einzugreifen, um es am Verschieben zu hindern, wenn der Solarpanelrahmen (24) zwischen der ersten und der zweiten Eingriffsfläche (42, 52) eingeklemmt ist, und
**dadurch gekennzeichnet, dass** die Befestigungsvorrichtung (4) eine Öffnung (44) in der ersten Eingriffsfläche (42) umfasst und das Verschiebungsschutzteil (8) ein zweites Vorsprungselement (82) auf einer gegenüberliegenden Seite des ersten Vorsprungselement (81) umfasst und wobei das Verschiebungsschutzteil (8) durch den Solarpanelrahmen (21) heruntergedrückt wird, wenn es zwischen der ersten und der zweiten Eingriffsfläche (42, 52) eingeklemmt ist, so dass das zweite Vorsprungselement (82) in die Struktur (3) unter der Befestigungsvorrichtung (4) durch die Öffnung (44) eingreift.

2. Montagevorrichtung (1) nach Anspruch 1, wobei das Befestigungselement (41) eine Klemme zum Befestigen der Montagevorrichtung (1) an die Struktur (3) umfasst.

3. Montagevorrichtung (1) nach einem der vorstehenden Ansprüche, wobei die Befestigungsvorrichtung (4) eine erste Eingriffsfläche (42) auf jeder Seite des Klemmführungsvorsprungs (43) umfasst und die Klemmvorrichtung (5) zwei Leisten (51) umfasst, jeweils mit einer zweiten Eingriffsfläche (52), die einer jeweiligen ersten Eingriffsfläche (42) zugewandt ist, so dass zwei Seiten der Montagevorrichtung (1) zum Befestigen eines Solarpanels (2) verwendet werden können.

4. Montagevorrichtung (1) nach einem der vorstehenden Ansprüche, wobei der Hebelverriegelungsstift (6) einen Befestigungsvorsprung (61) umfasst und der Klemmführungsvorsprung (43) eine Klemmführungsöffnung (431a, 432a) zum Aufnehmen des Befestigungsvorsprung (61) umfasst und somit die drehbare Anbringung (7) bilden.

5. Montagevorrichtung (1) nach einem der vorstehenden Ansprüche, wobei die Klemmvorrichtung (5) eine Auflagefläche (53) umfasst, die parallel zu der ersten und zweiten Eingriffsfläche (42, 52) ist und wobei der Hebelverriegelungsstift (6) eine Pressfläche (621, 622) umfasst, welche gegen die Auflagefläche (53) in der geschlossenen Position drückt.

6. Montagevorrichtung (1) nach Anspruch 4 und 5, wobei der Klemmführungsvorsprung (43) einen ersten und einen zweiten Vorsprung (431, 432) umfasst, jeweils mit einer jeweiligen Klemmführungsöffnung (431a, 432a) und wobei der Hebelverriegelungsstift (6) einen ersten und einen zweiten Befestigungsvorsprung (611, 612) umfasst, die jeweils in einer jeweiligen Klemmführungsöffnung (431a, 432a) aufgenommen werden sollen.

7. Montagevorrichtung (1) nach Anspruch 6, wobei die Pressfläche eine erste Pressfläche (621) und eine zweite Pressfläche (622) umfasst, die auf gegenüberliegenden Seiten des Hebelverriegelungsstift (6) angeordnet sind, wobei der Hebelverriegelungsstift (6) angeordnet ist, um an dem Klemmführungsvorsprung (43) auf zwei Arten angebracht zu werden, eine bei welcher der erste Befestigungsvorsprung (611) in der Klemmführungsöffnung (431a) des ersten Vorsprungs (431) angeordnet ist und bei der die erste Pressfläche (621) gegen die Auflagefläche (53) in der geschlossenen Position drückt, und eine bei welcher der erste Befestigungsvorsprung (611) in der Klemmführungsöffnung (432a) des zweiten Vorsprungs (432) angeordnet ist und bei welcher die zweite Pressfläche (622) gegen die Auflagefläche (53) in der geschlossenen Position drückt.

8. Montagevorrichtung (1) nach Anspruch 7, wobei der erste und der zweite Befestigungsvorsprung (611, 612) in einem ersten Abstand von der ersten Pressfläche (621) und in einem zweiten Abstand von der zweiten Pressfläche (622) angeordnet sind, wobei der erste und der zweite Abstand nicht gleich sind.

9. Montagevorrichtung (1) nach einem der vorstehenden Ansprüche, wobei die Befestigungsvorrichtung (4) Kabelhalter (45) zum Halten von elektrischen Kabeln, die den Solarpanelen (2) zugeordnet sind, umfasst.

10. Montagevorrichtung (1) nach Anspruch 3, umfassend ein Endstück (9), das angeordnet ist, um an einer Seite der Klemmvorrichtung (5) angebracht zu werden, so dass die Seite der Klemmvorrichtung (5) durch das Endstück (9) abgedeckt wird, wenn nur eine Leiste (51) zum Befestigen eines Solarpanels (2) verwendet werden soll.

11. Verwendung der Montagevorrichtung (1) nach einem der vorstehenden Ansprüche zum Montieren von Solarpanelen (2) an eine Struktur (3).

12. System zum Montieren von Solarpanelen (2), wobei das System Folgendes umfasst:
- eine Struktur (3) in Form einer Trageschiene, die zwei Längsnuten (31) umfasst, die an gegenüberliegenden seitlichen Seiten der Struktur (3) angeordnet sind,
- eine Montagevorrichtung (1) nach einem der Ansprüche 1 - 10,
wobei das Befestigungselement (41) zwei Flügel (411) umfasst, die in einem Abstand zueinander angeordnet sind und einen Raum (412) zum Aufnehmen eines Teils der Struktur (3) definieren, wobei jeder Flügel (411) ein Eingriffselement (411a) umfasst, das dazu ausgelegt ist, mit einer jeweiligen Nut (31) der Struktur (3) in Eingriff zu kommen.

## Revendications

1. Dispositif de montage (1), pour le montage de panneaux solaires (2) sur une structure (3), le dispositif de montage (1) comprenant :
- un dispositif de fixation (4) comprenant un élément de fixation (41), pour la fixation du dispositif de montage (1) à la structure (3), et une première surface de mise en prise (42), pour mettre en prise une face inférieure (211) d'un cadre de panneau solaire (21),
- un dispositif de serrage (5) comprenant un rebord (51) avec une seconde surface de mise en prise (52) faisant face à la première surface de mise en prise (42), pour le serrage du cadre de panneau solaire (21) entre les première et seconde surfaces de mise en prise (42, 52),
le dispositif de fixation (4) comprend une saillie de guidage de serrage (43) agencée perpendiculairement à la première surface de mise en prise (42), dans lequel le dispositif de serrage (5) est agencé de manière coulissante sur la saillie de guidage de serrage (43) de telle sorte qu'il puisse coulisser perpendiculairement à la première surface de mise en prise (42), et le dispositif de montage (1) comprend :
- une goupille de verrouillage de levier (6) attachée avec une attache rotative (7) à la saillie de guidage de serrage (43), la goupille de verrouillage de levier (6) étant rotative entre une position ouverte et une position fermée, dans lequel la goupille de verrouillage de levier (6) est agencée pour pousser le dispositif de serrage (5) vers le dispositif de fixation (4) dans la position fermée de sorte que le cadre de panneau solaire (21) est serré entre les première et seconde surfaces de mise en prise (42, 52),
- une partie d'empêchement de coulissement (8) agencée au niveau de la première surface de mise en prise (42), la partie d'empêchement de coulissement (8) comprenant un premier élément saillant (81) agencé pour se mettre en prise dans la face inférieure (211) du cadre de panneau solaire (21) pour l'empêcher de coulisser lorsque le cadre de panneau solaire (24) est serré entre les première et seconde surfaces de mise en prise (42, 52), et
**caractérisé en ce que** le dispositif de fixation (4) comprend une ouverture (44) dans la première surface de mise en prise (42) et la partie d'empêchement de coulissement (8) comprend un second élément saillant (82) sur un côté opposé du premier élément saillant (81), et dans lequel la partie d'empêchement de coulissement (8) est poussée vers le bas par le cadre de panneau solaire (21) lorsqu'il est serré entre les première et seconde surfaces de mise en prise (42, 52) de telle sorte que le second élément saillant (82) met en prise la structure (3) sous le dispositif de fixation (4) à travers l'ouverture (44).

2. Dispositif de montage (1) selon la revendication 1, dans lequel l'élément de fixation (41) comprend un collier de serrage pour la fixation du dispositif de montage (1) à la structure (3).

3. Dispositif de montage (1) selon l'une quelconque revendication précédente, dans lequel le dispositif de fixation (4) comprend une première surface de mise en prise (42) de chaque côté de la saillie de guidage de serrage (43) et le dispositif de serrage (5) comprend deux rebords (51), chacun avec une seconde surface de mise en prise (52) faisant face à une première surface de mise en prise (42) respective, de telle sorte que deux côtés du dispositif de montage (1) peuvent être utilisés pour fixer un panneau solaire (2).

4. Dispositif de montage (1) selon l'une quelconque revendication précédente, dans lequel la goupille de verrouillage de levier (6) comprend une saillie d'attache (61) et la saillie de guidage de serrage (43) comprend une ouverture de guidage de serrage (431a, 432a) pour la réception de la saillie d'attache (61) et donc la formation de l'attache rotative (7).

5. Dispositif de montage (1) selon l'une quelconque revendication précédente, dans lequel le dispositif de serrage (5) comprend une surface d'appui (53) qui est parallèle aux première et seconde surfaces de mise en prise (42, 52) et la goupille de verrouillage de levier (6) comprend une surface de pression (621, 622) qui exerce de la pression contre la surface d'appui (53) dans la position fermée.

6. Dispositif de montage (1) selon la revendication 4 et 5, dans lequel la saillie de guidage de serrage (43) comprend une première et une seconde saillie (431, 432), chacune avec une ouverture de guidage de serrage (431a, 432a) respective et la goupille de verrouillage de levier (6) comprend une première et une seconde saillie d'attache (611, 612), chacune pour être reçue dans une ouverture de guidage de serrage (431a, 432a) respective.

7. Dispositif de montage (1) selon la revendication 6, dans lequel la surface de pression comprend une première surface de pression (621) et une seconde surface de pression (622) agencées sur des côtés opposés de la goupille de verrouillage de levier (6), dans lequel la goupille de verrouillage de levier (6) est agencée pour être attachée à la saillie de guidage de serrage (43) de deux façons, une où la première saillie d'attache (611) est agencée dans l'ouverture de guidage de serrage (431a) de la première saillie (431) et où la première surface de pression (621) exerce de la pression contre la surface d'appui (53) dans la position fermée et une où la première saillie d'attache (611) est agencée dans l'ouverture de guidage de serrage (432a) de la seconde saillie (432) et où la seconde surface de pression (622) exerce de la pression contre la surface d'appui (53) dans la position fermée.

8. Dispositif de montage (1) selon la revendication 7, dans lequel les première et seconde saillies d'attache (611, 612) sont agencées à une première distance depuis la première surface de pression (621) et au niveau d'une seconde distance depuis la seconde surface de pression (622), dans lequel la première et la seconde distance ne sont pas la même.

9. Dispositif de montage (1) selon l'une quelconque revendication précédente, dans lequel le dispositif de fixation (4) comprend des supports de câble (45) pour le support de câbles électriques associés aux panneaux solaires (2).

10. Dispositif de montage (1) selon la revendication 3, comprenant une pièce d'extrémité (9) agencée pour être attaché sur un côté du dispositif de serrage (5) de telle sorte que le côté du dispositif de serrage (5) est couvert par la pièce d'extrémité (9) lorsqu'un seul rebord (51) est à être utilisé pour fixer un panneau solaire (2).

11. Utilisation du dispositif de montage (1) selon l'une quelconque des revendications précédentes pour le montage de panneaux solaires (2) à une structure (3).

12. Système pour le montage de panneaux solaires (2), dans lequel le système comprend :
- une structure (3) sous la forme d'un rail de soutien comprenant deux rainures longitudinales (31) agencées sur des côtés latéraux opposés de la structure (3),
- un dispositif de montage (1) selon l'une quelconque des revendications 1 à 10,
dans lequel l'élément de fixation (41) comprenant deux ailes (411) agencées à une distance l'une de l'autre et définissant un espace (412) pour la réception d'une partie de la structure (3), chaque aile (411) comprend un élément de mise en prise (411a) adapté pour se mettre en prise avec une rainure (31) respective de la structure (3).
